**Europäisches Patentamt**

**European Patent Office**

**Office européen des brevets**

(19)

(11) Veröffentlichungsnummer: **0 314 129 B1**

(12) # EUROPÄISCHE PATENTSCHRIFT

(45) Veröffentlichungstag der Patentschrift:
11.09.91 Patentblatt 91/37

(51) Int. Cl.$^5$: **F01N 3/28, F01N 3/04**

(21) Anmeldenummer: **88117925.3**

(22) Anmeldetag: **27.10.88**

---

(54) **Katalysatoranlage.**

---

(30) Priorität: **28.10.87 DE 3736500**

(43) Veröffentlichungstag der Anmeldung:
**03.05.89 Patentblatt 89/18**

(45) Bekanntmachung des Hinweises auf die
Patenterteilung:
**11.09.91 Patentblatt 91/37**

(84) Benannte Vertragsstaaten:
**AT BE CH DE ES FR GB GR IT LI LU NL SE**

(56) Entgegenhaltungen:
EP-A- 0 128 653
AU-B- 438 040
DE-A- 2 401 287
DE-A- 3 439 891
FR-A- 2 454 517
US-A- 3 972 687
US-A- 4 190 629
Patent Abstracts of Japan, Band 9, Nr. 162
(M-394 (1885), 6.Juli 1985

(73) Patentinhaber: **KST-Motorenversuch GmbH &
Co. KG
Industriegebiet
W-6702 Bad-Dürkheim (DE)**

(72) Erfinder: **Wolf, Rainer
Nolzeruhe 11
W-6702 Bad Dürkheim (DE)**
Erfinder: **Volz, Jürgen
von-Wieser-Strasse 31
W-6701 Friedelsheim (DE)**
Erfinder: **Burghardt, Peter
Hardenburgstrasse 8
W-6701 Maxdorf (DE)**
Erfinder: **Sand, Roland
Hintere Strasse 40
W-6729 Neupolz (DE)**

(74) Vertreter: **Zellentin, Wiger et al
Patentanwälte Dr. rer. nat. Rüdiger Zellentin
Dipl.-Ing. Wiger Zellentin Rubensstrasse 30
W-6700 Ludwigshafen (DE)**

**Beschreibung**

Die vorliegende Erfindung betrifft eine Katalysatoranlage für Ottomotoren, die insbesondere "fett", d.h. unterstöchiometrisch bei einem Luft-Kraftstoff-Verhältnis kleiner 1 betrieben werden.

Voraussetzung für den Einsatz der bekannten Dreiweg-Katalysatoren ist das Vorhandensein einer Einspritzanlage, bzw. elektrisch geregelter Vergaser, da nur diese einen Betrieb des Ottomotors im sog. "Lambda-Fenster", d.h. bei $\lambda = 0,98$ bis $\lambda = 1,02$ für die geforderten hohen Schadstoffreduzierungen erlauben. Ungeregelte Katalysatoren erfordern, das Gemisch im gesamten Betriebskennfeld bei $\lambda = 0,95$ bis $\lambda = 1,03$ zu halten, führen aber lediglich zu Schadstoffreduzierungen im Mittel von 50%.

Die vorliegende Erfindung hat sich demgegenüber die Aufgabe gestellt, eine Katalysatoranlage für Ottomotoren zu finden, mit deren Hilfe Abgase von Bootsmotoren auch bei fetter Betriebsweise, d.h. mit hohen CO— und HC-Emissionen aufgearbeitet werden können (z.B. CO-Emissionen von über 6%).

Die vorliegende Erfindung soll sich daher insbesondere zur Anwendung an Bootsmotoren eignen die teils mit sehr hohen Lambda-Werten zwischen etwa 0,75 und 0,90 betrieben werden.

Die Lösung dieser Aufgabe gelingt mit einer Katalysatoranlage zur Verringerung der Schadstoffemissionen (Kohlenwasserstoffe, Kohlenmonoxid und Stickoxide) von Bootsmotoren mit einem stromauf im Abgasstrang liegenden reduktiven Teil und einem stromab liegenden oxidativen Katalysatorteil bei rein axialer Führung des Abgases durch die Katalysatorteile, die die folgende Merkmalskombination besitzt:

a) der Katalysator ist umgeben von einem wassergekühlten Gehäuse

b) zwischen Katalysatormantel und wassergekühltem Gehäuse ist ein Luftspalt belassen

c) stromab im Abgasstrang ist eine Sekundärlufteinblasung angeordnet

d) die Sekundärluft ist über den oxidativen Katalysatorteil durch den Spalt in einen Zwischenraum zwischen reduktivem und oxidativem Katalysatorteil geführt.

Die vorliegende Erfindung läßt sich mit besonderem Vorteil bei Bootsmotoren einsetzen, für die die Abgasentgiftung durch katalytische Nachbehandlung des Abgases noch nicht bekannt ist.

Der Kraftstoffverbrauch der Motoren spielt bei Sportbooten mit Ottomotoren nur eine untergeordnete Rolle, was auf die Nutzung als Freizeitgerät mit im Vergleich zu Kraftfahrzeugen kurzen Nutzungszeiten und das günstige Transport-/Betriebsleistung-Verhältnis von Schiffen zurückzuführen ist. Aus diesem Grund und wegen relativ niedriger Herstellungspreise werden in Sportbooten oft "marinisierte" V-8-Fahrzeug-Ottomotoren eingesetzt, die spezifisch (PS/kg) niedrig belastet sind. Boote für längere Laufstrecken sind in der Regel mit sparsameren Dieselmotoren ausgerüstet.

Bootsmotoren werden prinzipiell nur im Leerlaufbetrieb und auf der Propellerkennlinie mit hohem Vollastanteil beansprucht. Der bei Kraftfahrzeugen vorkommende Schubbetrieb, ständige Drehzahl- und Lastwechsel, Schaltvorgänge und stop-and-go-Betrieb kommen im Bootsbetrieb praktisch nicht vor.

Diese Motoren laufen aus Gründen der Laufqualität und Innenkühlung mit deutlichem Luftmangel und damit wie erwähnt hohen CO— und HC-Emissionen, dafür aber relativ geringen NOx-Anteilen.

Die erfindungsgemäße Lösung führt zu einer über 90%igen Schadstoffreduzierung aller drei genannten Schadstoffkomponenten.

Es wird vorgeschlagen, anstelle der im Kfz-Bau bislang üblicherweise verwendeten Keramikkatalysatoren metallische Träger, insbesondere in Metallpatronen zu verwenden, die außer der Schockunempfindlichkeit und der hohen Temperaturverträglichkeit konstruktive Vorteile, wie geringere Dimensionierung, mit sich bringen.

Insbesondere wird vorgeschlagen, die Patronen leicht auswechselbar im Katalysatorgehäuse zu lagern, um diese bei Schädigung, Vergiftung oder Nichtverfügbarkeit von bleifreiem Kraftstoff schnell entfernen bzw. austauschen zu können. Dazu sind die Katalysatorteile erfindungsgemäß in einer Metallhülse (Patrone) untergebracht, in der zwischen reduktivem und oxidativem Teil Lufteintrittslöcher angeordnet sind.

Eine leichte Montage bzw. Auswechselbarkeit wird erfindungsgemäß dadurch erreicht, daß das Katalysatorgehäuse lösbar mit einem (ebenfalls wassergekühlten) Bogenstück verbunden ist, das seinerseits auf dem wassergekühlten Abgaskrümmer ruht. So kann das Katalysatorgehäuse leicht vom Bogenstück getrennt und die Patrone kann herausgezogen werden. Das Bogenstück weist dabei eine Krümmung von mindestens 90° auf.

Ein sehr wesentlicher Aspekt der vorliegenden Erfindung bezieht sich auf die Lagerung der Patrone im Katalysatorgehäuse. Da die Manteltemperatur des Katalysators 900°C und darüber erreichen kann, andererseits der Luftspalt zwischen Patrone und Innenmantel des Gehäuses gering dimensioniert sein muß und gleichzeitig starke Schwingungsbelastungen (30 g und darüber) auftreten, besteht weiterhin die Aufgabe, trotz dieser Vorgaben eine stabile Lagerung zu schaffen und Leichtmetall, wie Aluminium, für das Katalysatorgehäuse einsetzbar zu machen. Die Lösung dieser Aufgabe gelingt erfindungsgemäß dadurch, daß das Katalysatorgehäuse an seiner Innenwandung vordere und hintere Ausnehmungen aufweist, daß der vordere, reduktive Katalysatorteil mit einem Ring versehen ist, der vorzugsweise einen trapezförmigen Querschnitt besitzt, gegen den und das Katalysatorgehäuse beidseitig Drahtpreßringe unter Bildung eines Festlagers anliegen und mit Hilfe des Bogenstückes eingespannt sind und daß der hintere, oxidative Katalysatorteil endseitig von einem Drahtpreßring umgeben ist, der sich gegen die Ausnehmungen stützt. Gleichzeitig liegt er an der Patrone an und ist von einem lösbar mit dem Katalysatorgehäuse verbundenen Auspuffanschluß unter Bildung eines Loslagers radial gehalten. Unter Drahtpreßringen werden verflochtene und zu Ringen geformte Drähte verstanden. Solche Drahtpreßringe sind handelsüblich.

Die Drahtpreßringe verhindern dabei einerseits einen hohen Wärmeübergang, dämpfen aber auch andererseits die Schwingungsübertragung auf die Patrone. Darüber hinaus lassen sich die Drahtpreßringe in der angegebenen Weise zu einem Fest- und einem Loslager unter Beibehalt einer leichten Montage und Demontage einsetzen, da sich diese beim Einpressen durch Bogenstück und Auspuffanschluß gegen die Ausnehmung bzw. den Trapezring und die Patrone elastisch verformend anlegen.

Weiterhin wird vorgeschlagen, die Drahtpreßringe in verformbare felgenartige Metallringe einzulegen. Dadurch wird in einfacher Weise ein Gasabschluß zu den benachbarten Kammern erreicht, wobei die Dichtung am reduktiven Ende durch Anlegen der Metallringflanken an die Stirnfläche der Ausnehmung und das Bogenstück sowie an die Trapezflächen des Stützrinpes und am oxidativen Ende durch Auflegen des Ringes auf die Patrone und Anlegen an die Ausnehmung sowohl als auch die Stirnfläche des Auspuffanschlusses hergestellt wird. Vorzugsweise besitzen die Preßringe und die Stützringe dazu sich nach außen erweiternde Flanken. Durch entsprechende Dimensionierung wird so zur Ermöglichung von Längenveränderungen der Patrone eine Aufteilung in ein Fest- und ein Gleitlager geschaffen.

Es hat sich durch Versuche herausgestellt, daß der Ringspalt um den Katalysator und der Abstand der beiden Katalysatorteile voneinander in einem bestimmten zahlenmäßigen Verhältnis zueinander stehen soll, um den Katalysator zu optimieren. Als besonders günstig hat sich erwiesen, den Ringspalt ca. 1-10 mm breit und den Abstand auf kleiner als 20 mm einzustellen.

Ähnlich wie bei den Abgasentgiftungsanlagen in Kraftfahrzeugen ist es notwendig, auch die Anlagen in Booten regelmäßig auf ihre Wirksamkeit hin zu überprüfen. Da der Hauptbetriebsbereich von Bootsmotoren über die Propellerkurven vorgegeben ist, kann die Überprüfung wesentlich einfacher als beim Kraftfahrzeug mit einer Messung der relevanten Abgaskomponenten nach Katalysator auf der Propeller-Kennlinie in definierten Lastpunkten durchgeführt werden.

Dazu wird vorgeschlagen, am Austritt des Abgases aus der Katalysatorpatrone, noch vor der Einspeisung des Kühlwassers zum Abgas, eine Abgasentnahmestelle vorzusehen.

Die Messung des Abgases erfolgt an dieser Stelle mit Hilfe inzwischen verfügbarer, tragbarer Meßgeräte für Kohlenwasserstoffe, Kohlenmonoxid und Stickoxid. Um unter Last messen zu können, wird das Boot unter Mitnahme der Meßgeräte gefahren oder mittels Leinen an einem entsprechend stabilen Steg festgelegt. Eine Kontrolle über den Lastzustand des Motors erfolgt über die Drehzahlmessung bei vorgegebenem Propeller.

Die bei einer solchen Kurzüberprüfung noch zulässigen Meßwerte müssen bei der Typisierung der einzelnen Bootsantriebe ermittelt und als Grenzwerte in die Bootspapiere bzw. in die Motorpapiere übernommen werden, so daß sie bei der Nachprüfung zur Verfügung stehen.

Bei Ergänzung dieser Kontrolle durch Messungen des Abgases vor dem Katalysator können dem Bootseigner im Falle zu hoher Abgaswerte auch Hinweise auf die Art der Fehlfunktion von Gemischaufbereitung, Zündanlage und insbesondere der Abgasentgiftungsanlage des Motors gegeben werden, was gezielte Reparaturen erleichtert.

Zur Entleerung von etwaigem Kondenswasser aus dem Katalysatorinneren sowie zur Vermeidung des Eintretens von Kühlwasser wird dieser vorzugsweise stromab geneigt auf den Krümmer aufgesetzt, d.h. das Bogenstück weist eine 90° entsprechend übersteigende Krümmung auf.

Die Abgastemperatur im Bogenstück liegt etwa bei 700°C zur Verringerung der Baugröße des Katalysators oder zur Erhöhung der Umsetzungsrate und zur Vergleichmäßigung der Wärmeverteilung wird vorgeschlagen, zusätzlich Sekundärluft in das Bogenstück einzublasen, wodurch CO— und KW-Anteile um ca. 50% gesenkt werden können. Die Einblasung erfolgt vorzugsweise im Gegenstrom in das Bogenstück. Die Einblasung zusätzlicher Sekundärluft kann aber auch über einen zweiten Sekundärlufteinlaß z.B. im Querstrom erfolgen.

Durch die Gegenstromführung der Sekundärluft und ihre Vorerhitzung durch die vom Katalysatormantel abgegebene Wärme einerseits, und die ringförmige Zuführung dieser Sekundärluft auf die Eintrittsoberfläche des Oxidationskatalysators, wird die hohe Wirksamkeit der erfindungsgemäßen Vorrichtung, insbesondere bei niedriger Motorbelastung und nach Startvorgängen zurückgeführt. Bei hoher Motor- und Katalysatorbelastung dient der ständig erneuerte Luftmantel auch wesentlich zur Isolation des sehr heißen Katalysators von den kalten, wassergekühlten Gehäuseteilen.

Da die Katalysatortemperaturen so hoch sind, daß bei Austreten von Abgas in den Bootsraum Brandgefahr besteht, sind die Sekundärluftzuführungen mit Rückschlagventilen ortsfest am Katalysatorgehäuse zu versehen, so daß z.B. nach Beschädigung der Sekundärluftzuleitungen kein Gas aus dem Gehäuse entweichen kann.

Mit dem erfindungsgemäßen Katalysator wurde folgender Versuch durchgeführt :

Als Versuchsträger diente ein ca. 7 m langes Boot mit einem Gesamtgewicht von ca. 2000 kg. Dieses Boot wurde betrieben mit einem V-8-Vergasermotor mit 226 kW und einem Propeller von 15 × 19 Zoll im betrieb.

Auf die Krümmer wurden die erfindungsgemäßen Katalysatoranlagen mit separaten Luftpumpen installiert. Vor und nach den Katalysatoren waren Abgasentnahmestellen angeordnet. Druck und Temperatur wurden überwacht.

Ergebnisse

Die Fahrleistungen wurden nicht reduziert, die äußere Oberfläche des gesamten Gehäuses blieb auch bei Vollast nur handwarm.

Die Lambdawerte bewegten sich über den gesamten Drehzahlbereich zwischen 0,77 und 0,82, dementsprechend niedrig lagen auch die Abgastemperaturwerte vor Katalysator bei maximal 680°C.

Mit den Sekundärluftpumpen wurden Lambdawerte vor dem Oxidationskatalysator von $\lambda$ = 1,08 bis 1,14 eingestellt, verbunden damit war ein Temperaturanstieg auf bis zu 1000°C im Abgas.

Die CO-Anteile vor Katalysator betrugen zwischen 7 und 9%, die HC-Emission lag bei max. 500 ppm, der NOx-Wert bei maximal 340 ppm. Nach Katalysator wurde gemessen für CO 0,5%, für HC 50 ppm und für NOx 130 ppm.

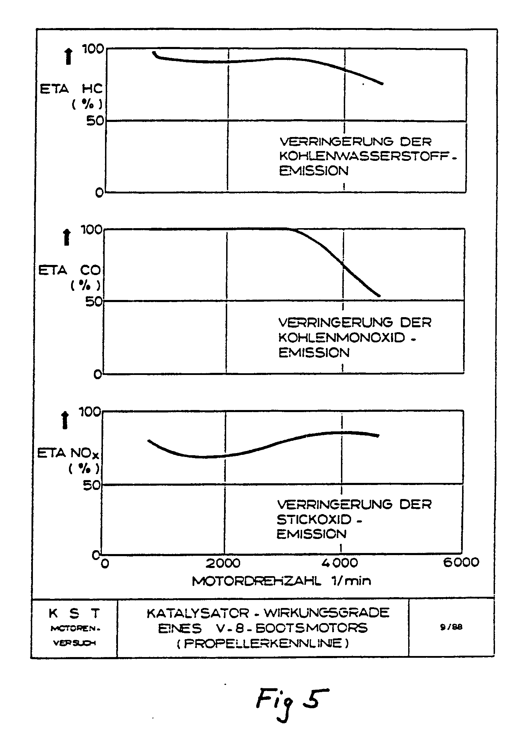

Die Versuche sind in den 4 und 5 dargestellt, wobei aus Figur 5 auch die Schadstoffumwandlungsraten errechnet werden können (im Mittel 90%).

Anhand der beiliegenden Figuren wird die erfindungsgemäße Vorrichtung für einen Bootsmotor beispielhaft erläutert.

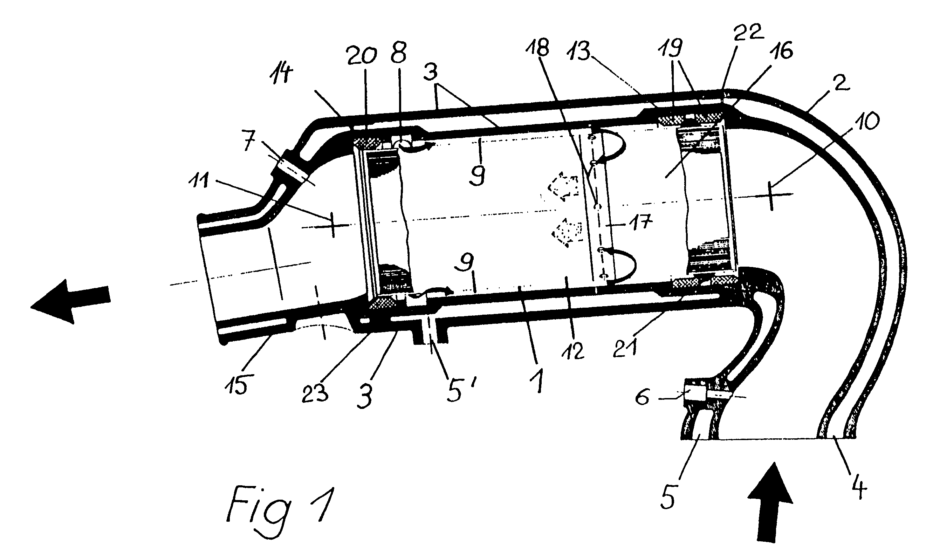

Fig. 1 zeigt einen Schnitt durch die Katalysatoranlage
Fig. 2 zeigt die Lagerung der Patrone
Fig. 3 zeigt einen Bootsmotor.

Auf einem wassergekühlten doppelwandiigen Abgaskrümmer (der bei V-Motoren beidseitig angeordnet ist) befindet sich ein Bogenstück 2, das lösbar mit dem Krümmer und dem anschließenden Katalysatorgehäuse 3 verbunden ist, die beide ebenfalls doppelwandig und wassergekühlt ausgeführt sind. Das Bogenstück weist eine Biegung von mehr als 90° auf, wodurch einerseits das Katalysatorgehäuse zur Kodenswasserentleerung geneigt angeordnet ist und wodurch andererseits die Katalysatorpatrone 1 mit den reduktiven 16 und oxidativen 12 Teilen leicht ausbaubar gelagert ist, um beispielsweise diesen auszutauschen oder auch im Bedarfsfall mit verbleitem Benzin fahren zu können.

Die Katalysatorpatrone 1 verbindet die beiden Katalysatorteile 12 und 16 unter Freilassung eines der Sekundärluftzuführung dienenden Zwischenraumes 9.

Die Patrone 1 ist im Katalysatorgehäuse 3 mit Hilfe von Drahtpreßringen 19, 20 und einem Trapezring 21 gelagert, die Drahtpreßringe liegen in Ausnehmungen 13 und 14.

Abgasstromab ist im Katalysatorgehäuse 3 eine mit einem (nicht dargestellten) Sekundärluftgebläse verbundene Sekundärluftzuführung 8 angeordnet, über die Umgebungsluft in den Ringspalt der Luftvorwärmung 9 gelangt und über die Oberfläche des oxidativen Katalysatorteils 12 erwärmt wird. Die Einblasung der Sekundärluft kann dabei insbesondere auch mit tangentialer Komponente erfolgen, um eine gleichmäßige Umspülung der Katalysatorpatrone zu erreichen, da über die Vorwärmung der Sekundärluft wesentliche Wärmemengen von der Oberfläche abgezogen werden, wodurch zum einen die Kühlung des Katalysatorgehäuses 3 erheblich verbessert wird, was insbesondere der Sicherheit im Bootsbetrieb dient und zum anderen ein schnelles Erreichen der Betriebstemperatur (Anspringverhalten) ermöglicht wird.

Die Patrone 1 besitzt um den Zwischenraum 17 zwischen oxidativem und reduktivem Katalysatorteil Öffnungen 18 die, wie dargestellt, Lochform aber auch Schlitze oder dergleichen sein können, deren Dimensionierung dem zu tolerierenden Druckverlust und der motorspezifisch erforderlichen Sekundärluftmenge anzupassen ist.

Mit 4 ist der Kühlwasseranschluß und mit 5 der Kühlwasserablaß angedeutet, die sich vorteilhaft im nicht dargestellten Abgaskrümmer befinden. Für Kontrollzwecke sind im Bogenstück 2 und ausgangsseitig am Auspuffanschluß 15 Gasentnahmesonden 6 und 7 vorgesehen, ebenso können hier Lambdasonden 10 und 11 beziehungsweise zusätzliche Sekundärlufteinlässe untergebracht werden. Mit 5′ ist ein weiterer Kühlwasserablaß bezeichnet.

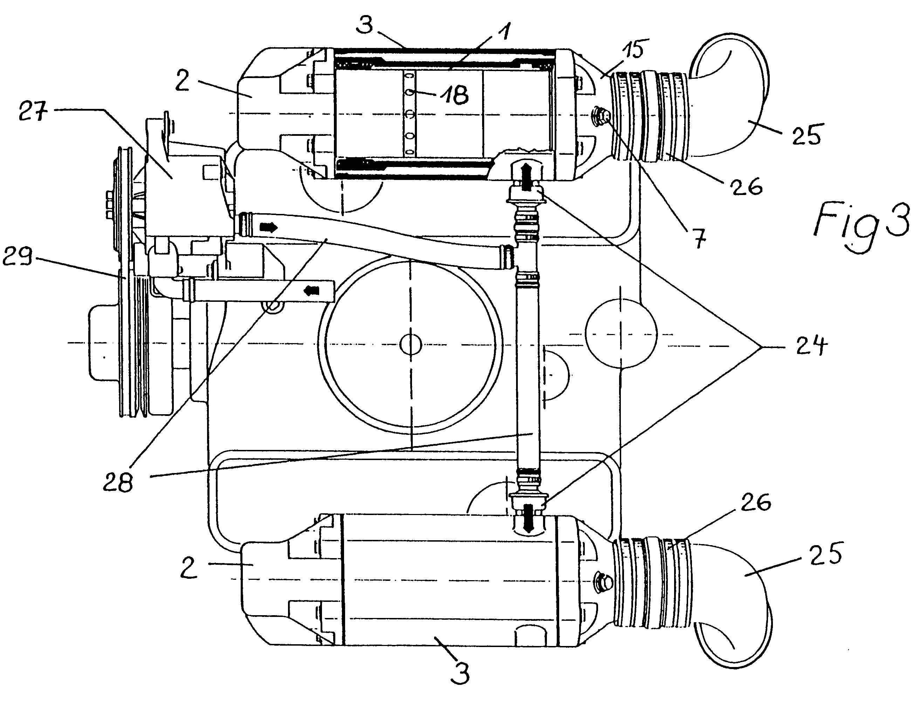

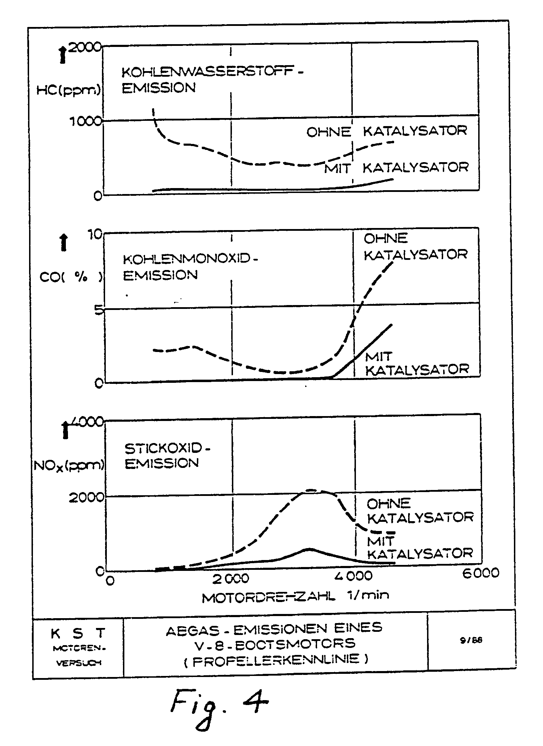

Begründet durch die besonderen Sicherheitsvorschriften im Bootsbetrieb werden an allen Sekundärlufteinlässen dargestellte Rückschlagventile vorgesehen (Fig. 3).

Der Auspuff ist über einen Verbindungsschlauch mit dem Auspuffanschluß 15 verbunden, der wiederum lösbar am Katalysatorgehäuse 3 befestigt ist. Letzteres weist beidendig Dichtungen 22, 23 auf. Nach dem Lösen der das Katalysatorgehäuse 3 mit dem Bogenstück 2 und dem Auspuffanschluß verbindenden Schrauben- oder Schnellverschlüsse kann das Gehäuse 3 herausgezogen und die Patrone entnommen werden.

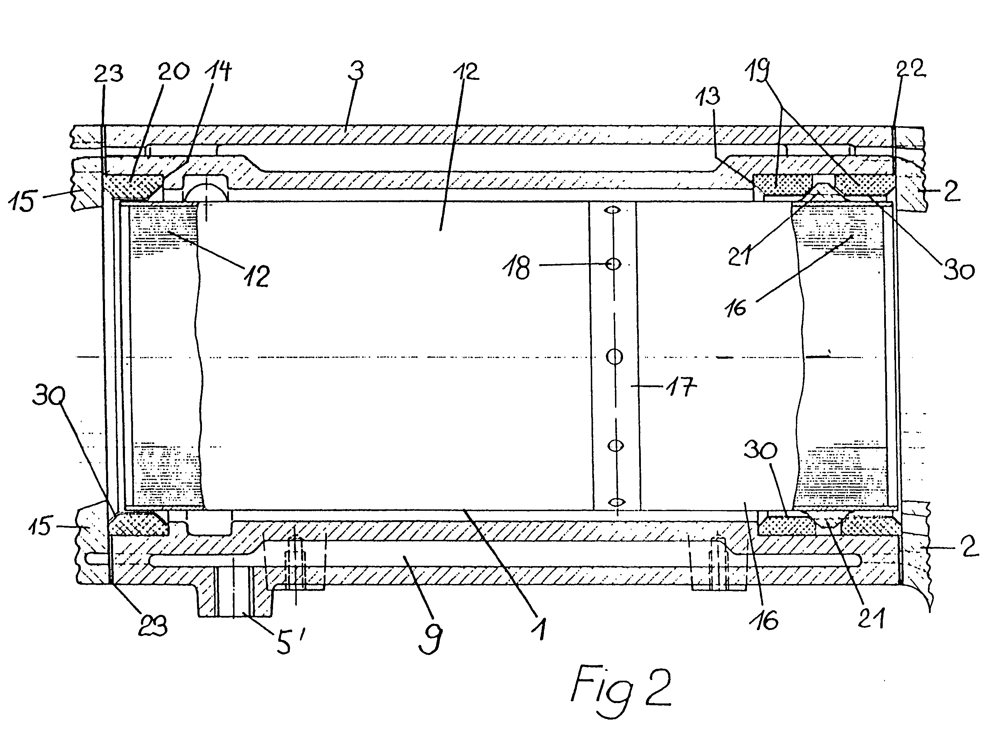

Fig. 2 zeigt das doppelwandige wassergekühlte Katalysatorgehäuse 3 sowie die je endseitige Lagerung in Drahtpreßringen 19 und 20. Dazu weist das Katalysatorgehäuse entsprechend Ausnehmungen 13 und 14 mit nach innen anschließenden Schultern auf, gegen die die Drahtpreßringe durch die Stirnflächen des Bogenstücks 2 und den Auspuffanschluß 15 gedrückt werden.

Die Drahtpreßringe 19, 20 haben dabei ein gewisses Übermaß, so daß sie sich beim Montieren des Katalysatorgehäuses 3 zwischen Auspuffanschluß 15 und Bogenstück 2 (elastisch) verformen und so zusammen mit dem auf die Patrone 1 aufgeschweißten Trapezring 21 beidseitig anliegend ein Festlager und am oxidativen, stromabliegenden Ende ein Loslager bilden. Der Ring 21 ist grundsätzlich nicht auf die Trapezform beschränkt, sie bietet jedoch den Vorteil eines größeren Abstandes der Drahtpreßringe 19 voneinander und durch die Schrägstellung der Flanken eine schwingungsdämpfende und doch ausreichend stabile Fixierung der Patrone 1 im Festlager.

Um gleiche Bauteile verwenden zu können und wegen des Vorteils der Verformung der Drahtpreßringe zur Mittelachse hin, sind sämtliche Drahtpreßringe hier mit schrägen, etwa an den Trapezring 21 angepaßten Flanken dargestellt, grundsätzlich sind hier auch andere Formen möglich.

Die Drahtpreßringe 19, 20 werden bei der Montage des Auspuffanschlusses 15 und des Bogenstücks 2 gestaucht und legen sich an die Wandungen der Ausnehmungen 13 und 14 an. Dies gibt die Möglickeit, den Luftspalt 9 nach außen hin abzudichten.

Für diesen Zweck sind die Drahtpreßringe in aus Blech gefertigte felgenförmige Stützringe 30 eingelegt, deren seitliche Flanken sowohl an den Stirnseiten der Ausnehmungen 14, 15, als auch an den Flächen des Trapezringes 21 und deren untere im Falle des Drahtpreßringes 20 in montiertem Zustand auf der Patrone 1 aufliegen. Die Ausnehmung 13 im Katalysatorgehäuse 3 ist dabei so dimensioniert, daß der Stützring mit seiner Innenfläche im eingespannten Zustand die Patrone 1 nicht berührt, da dies sonst die Dichtigkeit negativ beeinflussen könnte.

Montage und Demontage der Katalysatorpatrone sind damit erkennbar einfach, es brauchen lediglich die Verschraubungen mit dem Bogenstück 2 und dem Auspuffanschluß 15 gelöst zu werden. Dadurch verlieren die Drahtpreßringe und die Stützringe ihre Spannung, der Drahtpreßring dehnt sich vertikal aus, löst sich von der Patrone 1 und gibt sie frei, so daß diese zusammen mit dem äußeren Drahtpreßring 19 aus dem Katalysatorgehäuse herausgezogen werden kann.

Diese Art der Anordnung des Katalysators leitet derart wenig Wärme ab, daß ohne weiteres Aluminium als Katalysatorgehäuse-Material verwendet werden kann, selbst bei Spaltbreiten von wenigen Millimetern (1-10) und Oberflächentemperaturen der Patrone 1 von über 900 °C.

Fig. 3 zeigt die Anordnung von zwei Katalysatorgehäusen 3 auf einem V 8 - Bootsmotor. Über einen Keilriemen 29 wird das Gebläse 27 (Flügelzellenrad) angetrieben, das über die Leitungen 28 Sekundärluft in den Luftspalt zwischen Katalysatorgehäuse 3 und Patrone 1 im Gegenstrom zu den Auspuffgasen fördert. Die Sekundärluft gelangt über die Löcher 18 in den stromab liegenden oxidativen Katalysatorteil. Das entgiftete Gas verläßt über das Auspuffanschlußstück 15 den Katalysator und gelangt über den Gummischlauch 26 in den Auspuff 25.

Vor dem Katalysatorgehäuse 3 liegt stromauf das Bogenstück 2, das auf den darunter befindlichen, ebenfalls doppelwandigen und wassergekühlten Auspuffkrümmer aufgeschraubt ist.

Das Bogenstück 2 ist dabei, wie oben gesagt, um vorzugsweise mehr als 90° gekrümmt (bei ebenem Anschluß auf den Krümmer), so daß die Patrone 1 abgasstromab geneigt ist und auch Kondensat oder eingedrungenes Seewasser ablaufen kann.

Die katalytisch nachbehandelten Motorabgase besitzen eine so hohe Temperatur, daß Austritt aus dem Katalysatorgehäuse an den Bootskörper oder Einbauteile eine deutliche Brandgefahr darstellen. Die über den Auspuff ausgestoßenen Gase werden wassergekühlt und stellen insofern keine Gefahr dar.

Bei Versagen des Gebläses 27 oder Bruch der Leitungen 28 könnte hier jedoch heißes Abgas austreten, so daß Bootsbauteile daher erfindungsgemäß durch ortsfest am Katalysatorgehäuse angeordnete Rückschlagventile 24 geschützt sind.

## Patentansprüche

1. Katalysatoranlage zur Verringerung der Schadstoffemissionen (Kohlenwasserstoffe, Kohlenmonoxid und Stickoxide) von Bootsmotoren mit einem stromauf im Abgasstrang liegenden reduktiven Teil und einem stromab liegenden oxidativen Teil bei rein axialer Führung des Abgases durch die Katalysatorteile gekennzeichnet durch die folgenden Merkmale :

a) der Katalysator (16, 12) ist umgeben von einem wassergekühlten Gehäuse (3)

b) zwischen Katalysatormantel und wassergekühltem Gehäuse ist ein Luftspalt (9) belassen

c) stromab im Abgasstrang ist eine Sekundärlufteinblasung (8) angeordnet

d) die Sekundärluft ist über den oxidativen Katalysatorteil (12) durch den Spalt (9) in einen Zwischenraum (17) zwischen reduktivem (16) und oxidativem Katalysatorteil (12) geführt.

2. Katalysatoranlage nach Anspruch 1, dadurch gekennzeichnet, daß die Katalysatorteile (16, 12) in einer Metallpatrone (1) angeordnet sind, und zwischen Ihnen Luftöffnungen (18) freigelassen sind.

3. Katalysatoranlage nach Anspruch 1 oder 2, dadurch gekennzeichnet, daß das Katalysatorgehäuse (3) über ein wassergekühltes Bogenstück (2) mit einem Abgaskrümmer verbunden ist, wobei das Bogenstück (2) vom Katalysatorgehäuse (3) und gegebenenfalls Krümmer trennbar ist und eine Biegung von mindestens 90° aufweist.

4. Katalysatoranlage nach mindestens einem der Ansprüche 1 bis 3, dadurch gekennzeichnet, daß das Katalysatorgehäuse (13) an seiner Innenwandung vordere und hintere Ausnehmungen (13, 14) aufweist, daß der vordere, reduktive Katalysatorteil (16) mit einem Ring (21) versehen ist, der vorzugsweise einen trapezförmigen Querschnitt besitzt, gegen den und das Katalysatorgehäuse (3) beidseitig Drahtpreßringe (19) unter Bildung eines Festlagers anliegen und mit Hilfe des Bogenstückes (2) eingespannt sind und daß der hintere, oxidative Katalysatorteil (12) endseitig von einem Drahtpreßring (20) umgeben ist, der sich gegen die Ausnehmung (14) stützt, an der Patrone (1) anliegt und von einem lösbar mit dem Katalysatorgehäuse (3) verbundenen Auspuffanschluß (15) unter Bildung eines Loslagers gehalten ist.

5. Katalysatoranlage nach Anspruch 4, dadurch gekennzeichnet, daß die Drahtpreßringe (19, 20) in verformbaren metallischen Stützringen (30) liegen, die den Luftspalt (9) abdichten.

6. Katalysatoranlage nach Anspruch 5, dadurch gekennzeichnet, daß die Preßringe (19, 20) ebenso wie die Stützringe (30) sich nach außen erweiternde Flanken aufweisen.

7. Katalysatoranlage nach mindestens einem der Ansprüche 1 bis 6, dadurch gekennzeichnet, daß am Katalysatorgehäuse (3) Rückschlagventile (24) angeordnet sind, über die die Sekundärluft eingeblasen wird.

8. Katalysatoranlage nach mindestens einem der Ansprüche 1 bis 7, dadurch gekennzeichnet, daß vor und nach dem Katalysator (3) in der Abgasführung (14) Gasentnahmesonden (6, 7) und/oder Lambda-Sonden (10, 11) angeordnet sind.

9. Katalysatoranlage nach mindestens einem der Ansprüche 1-8, dadurch gekennzeichnet, daß der Katalysator (1) stromab geneigt auf dem Bogenstück (2) bzw. dem Auspuffkrümmer gehalten ist.

10. Katalysatoranlage nach mindestens einem der Ansprüche 1-9, dadurch gekennzeichnet, daß das Bogenstück (2) Zuführungen für zusätzliche Sekundärluft aufweist.

11. Katalysatoranlage nach Ansprüchen 4-10, dadurch gekennzeichnet, daß der Drahtpreßring in einer felgenförmigen Halterung aus Blech angeordnet ist, die an dem Innenmantel und den Seitenflanken des Drahtpreßringes anliegen, wobei die felgenförmige Halterung vorzugsweise einen trapezförmigen Querschnitt aufweist.

## Claims

1. Catalyst plant for the reduction of the emission of harmful materials (hydrocarbons, carbon monoxide and nitrogen oxides) from boat motors with a reductive part lying upstream in the waste gas path and an oxidative part lying downstream in the case of only axial conducting of the waste gas through the catalyst parts, characterised by the following features :

a) the catalyst (16, 12) is surrounded by a water-cooled housing (3)

b) an air gap (9) is left between catalyst mantel and water-cooled housing

c) a secondary air blowing in (8) is arranged downstream in the waste gas path

d) the secondary air is passed via the oxidative catalyst part (12) through the gap (9) into an intermediate space (17) between reductive (16) and oxidative catalyst part (12).

2. Catalyst plant according to claim 1, characterised in that the catalyst parts (16, 12) are arranged in a metal cartridge (1) and air openings (18) are left free between them.

3. Catalyst plant according to claim 1 or 2, characterised in that the catalyst housing (3) is connected via a water-cooled segment (2) with a waste gas elbow, whereby the segment (2) is separable from the catalyst housing (3) and possibly elbow and has a curvature of at least 90°.

4. Catalyst plant according to at least one of claims 1 to 3, characterised in that the catalyst housing (13) has front and rear recesses (13, 14) on its inner wall, that the front, reductive catalyst part (16) is provided with a ring (21) which preferably possesses a trapezium-shaped cross-section against which and the catalyst housing (3) lie on both sides wire pressure rings (19) with the formation of a firm support and are restrained with the help of the segment (2) and that the rear oxidative catalyst part (12) is surrounded on the end side by a wire pressure ring (20) which bears against the recess (14), lies against the cartridge (1) and is held by a detachable exhaust connection (15) connected with the catalyst housing (3) with the formation of a movable bearing.

5. Catalyst plant according to claim 4, characterised in that the wire pressure rings (19, 20) lie in deformable metallic bearing rings (30) which seal off the air gap (9).

6. Catalyst plant according to claim 5, characterised in that the pressure rings (19, 20), as well as the bearing rings (30), have outwardly widening flanks.

7. Catalyst plant according to at least one of claims 1 to 6, characterised in that on the catalyst housing (3) are arranged non-return valves (24) via which the secondary air is blown in.

8. Catalyst plant according to at least one of claims 1 to 7, characterised in that, before and after the catalyst (3), gas removal probes (6, 7) and/or lambda probes (10, 11) are arranged in the waste gas guide (14).

9. Catalyst plant according to at least one of claims 1-8, characterised in that the catalyst (1) is held downstream inclined towards the segment (2) or the exhaust elbow.

10. Catalyst plant according to at least one of claims 1-9, characterised in that the segment (2) has inlets for additional secondary air.

11. Catalyst plant according to claims 4-10, characterised in that the wire pressure ring is arranged in a wheel rim-shaped holder of sheet metal which lies against the inner mantel and the side flanks of the wire pressure ring, whereby the wheel rim-shaped holder preferably has a trapezium-shaped cross-section.

## Revendications

1. Installation à catalyseur pour réduire les émissions de substances nuisibles (hydrocarbures, monoxyde de carbone et oxydes d'azote) de moteurs de bateau, comprenant une partie réductrice située en amont dans la voie du gaz d'échappement et une partie oxydante située en aval, pour un guidage purement axial du gaz d'échappement à travers les parties à catalyseur, caractérisée par les particularités suivantes :

a) le catalyseur (16, 12) est entouré d'un boîtier (3) refroidi par de l'eau,

b) un espace d'air (9) est laissé entre l'enveloppe du catalyseur et le boîtier refroidi par de l'eau,

c) une injection d'air secondaire (8) est disposée en aval dans la voie du gaz d'échappement,

d) l'air secondaire est, par-dessus la partie à catalyseur oxydante (12), guidé à travers l'espace (9) dans un compartiment intermédiaire (17) situé entre la partie à catalyseur réductrice (16) et la partie à catalyseur oxydante (12).

2. Installation à catalyseur suivant la revendication 1, caractérisée en ce que les parties à catalyseur (16, 12) sont agencées dans une cartouche métallique (1) et en ce que des ouvertures à air (18) sont laissées libres entre elles.

3. Installation à catalyseur suivant l'une des revendications 1 et 2, caractérisée en ce que le boîtier à catalyseur (3) est, par l'intermédiaire d'une pièce cintrée (2) refroidie par de l'eau, relié à un coude à gaz d'échappement, la pièce cintrée (2) pouvant être séparée du boîtier à catalyseur (3) et éventuellement du coude et présentant une courbure d'au moins 90°.

4. Installation à catalyseur suivant au moins l'une des revendications 1 à 3, caractérisée en ce que le boîtier à catalyseur (13) présente sur sa paroi interne des évidements avant et arrière (13, 14), en ce que la partie à catalyseur réductrice, avant (16) est pourvue d'un anneau (21) qui présente de préférence une section transversale trapézoïdale, des anneaux de serrage (19) étant, des deux côtés, en appui contre cet anneau et le boîtier à catalyseur (3), avec formation d'un support fixe, et étant enserrés à l'aide de la pièce cintrée (2) et en ce que la partie à catalyseur oxydante, arrière (12) est entourée du côté de l'extrémité par un anneau de serrage (20) qui s'appuie contre l'évidement (14), prend appui sur la cartouche (1) et est maintenu par un raccord d'échappement (15), relié de manière détachable au boîtier à catalyseur (3), avec formation d'un support libre.

5. Installation à catalyseur suivant la revendication 4, caractérisée en ce que les anneaux de serrage (19, 20) se trouvent dans des bagues d'appui (30) métalliques, déformables, qui étanchéifient l'espace d'air (9).

6. Installation à catalyseur suivant la revendication 5, caractérisée en ce que les anneaux de serrage (19, 20) ainsi que les bagues d'appui (30) présentent des flancs qui s'élargissent vers l'extérieur.

7. Installation à catalyseur suivant au moins l'une des revendications 1 à 6, caractérisée en ce que des soupapes de retenue (24), par l'intermédiaire desquelles de l'air secondaire est injecté, sont agencées sur le boîtier à catalyseur (3).

8. Installation à catalyseur suivant au moins l'une des revendications 1 à 7, caractérisée en ce que, dans le conduit de gaz d'échappement, des sondes de prélèvement de gaz (6, 7) et/ou des sondes lambda (10, 11) sont agencées avant et après le catalyseur (3).

9. Installation à catalyseur suivant au moins l'une des revendications 1 à 8, caractérisée en ce que le catalyseur (1) est maintenu en aval de manière inclinée sur la pièce cintrée (2) ou coude d'échappement.

10. Installation à catalyseur suivant au moins l'une des revendications 1 à 9, caractérisée en ce que la pièce cintrée (2) présente des entrées pour de l'air secondaire supplémentaire.

11. Installation à catalyseur suivant l'une des revendications 4 à 10, caractérisée en ce que l'anneau de serrage est agencé dans un support en forme de jante en tôle qui est en appui sur l'enveloppe interne et les flancs latéraux de l'anneau de serrage, le support en forme de jante présentant de préférence une section transversale trapézoïdale.

Fig 1

Fig 2

Fig 3

Fig. 4

ETA HC ( % )

VERRINGERUNG DER KOHLENWASSERSTOFF - EMISSION

ETA CO ( % )

VERRINGERUNG DER KOHLENMONOXID - EMISSION

ETA NO$_x$ ( % )

VERRINGERUNG DER STICKOXID - EMISSION

MOTORDREHZAHL 1/min

| K S T MOTOREN- VERSUCH | KATALYSATOR - WIRKUNGSGRADE EINES V - 8 - BOOTSMOTORS ( PROPELLERKENNLINIE ) | 9 / 88 |

*Fig 5*